Europäisches Patentamt

European Patent Office

Office européen des brevets

(19)

(11) Publication number: **0 270 713 B1**

(12) ## EUROPEAN PATENT SPECIFICATION

(45) Date of publication of patent specification: **28.08.91**    (51) Int. Cl.5: **F04B 49/02**

(21) Application number: **86309700.2**

(22) Date of filing: **12.12.86**

(54) **Compressor assembly.**

(43) Date of publication of application:
**15.06.88 Bulletin 88/24**

(45) Publication of the grant of the patent:
**28.08.91 Bulletin 91/35**

(84) Designated Contracting States:
**BE DE ES FR IT NL SE**

(56) References cited:
**EP-A- 0 147 063**
**FR-A- 2 452 011**
**GB-A- 2 125 114**
**GB-A- 2 176 255**

(73) Proprietor: **BENDIX LIMITED**
**Douglas Road**
**Kingswood, Bristol BS15 2NL(GB)**

(72) Inventor: **Christmas, Michael Charles**
**2 Bellvue Road**
**St. George Bristol. BS5 7PG(GB)**

(74) Representative: **Turner, Alan Reginald**
**c/o Bendix Limited Douglas Road**
**Kingswood, Bristol BS15 2NL(GB)**

## Description

This invention relates to a compressor assembly and relates especially to a compressor assembly having a rotary member driven through a clutch.

Reciprocating piston type air compressors have already been proposed wherein a rotary member is driven through a friction clutch. Such compressors are conveniently employed to be driven from engines of heavy road vehicles for charging compressed air reservoirs of braking systems and by pneumatic operation of a clutch release mechanism the drive to the compressor can be interrupted when the reservoirs are fully charged.

One such compressor assembly is described in the Specification of EP-A-0147063. This prior published compressor assembly comprises a single-cylinder piston compressor which has a conventional crankshaft configuration supported in main bearings at each end of a crankcase the crankcase being extended beyond the respective main bearing on the drive end to accommodate a drive clutch. The clutch in this cited example comprises a multiplate friction clutch the shell of which is carried on the drive-end of the crankshaft to be connectable to the drive shaft member through the clutch plates when engaged.

Although the above described compressor assembly is robust and technically excellent in its operation it has a short-coming in that the crankcase is longer than is desirable for some engine installations and the present invention seeks to provide a more compact clutch driven compressor assembly.

According to the present invention there is provided a compressor assembly comprising a housing including a rotatable drive input shaft the outer end of which being rotatably supported by a first bearing means in the housing and being releasably coupled via a releasable friction clutch to a drive end of a compressor shaft the free end of which is rotatably supported by second bearing means in the housing, said compressor shaft having an eccentric part coupled to a reciprocable compression member characterised in that said drive input shaft carries third bearing means rotatably fitted to and supporting said drive end of the compressor shaft and that said clutch is at least partially contained in a space in the housing defineable by a projection of the path of movement of the compression member.

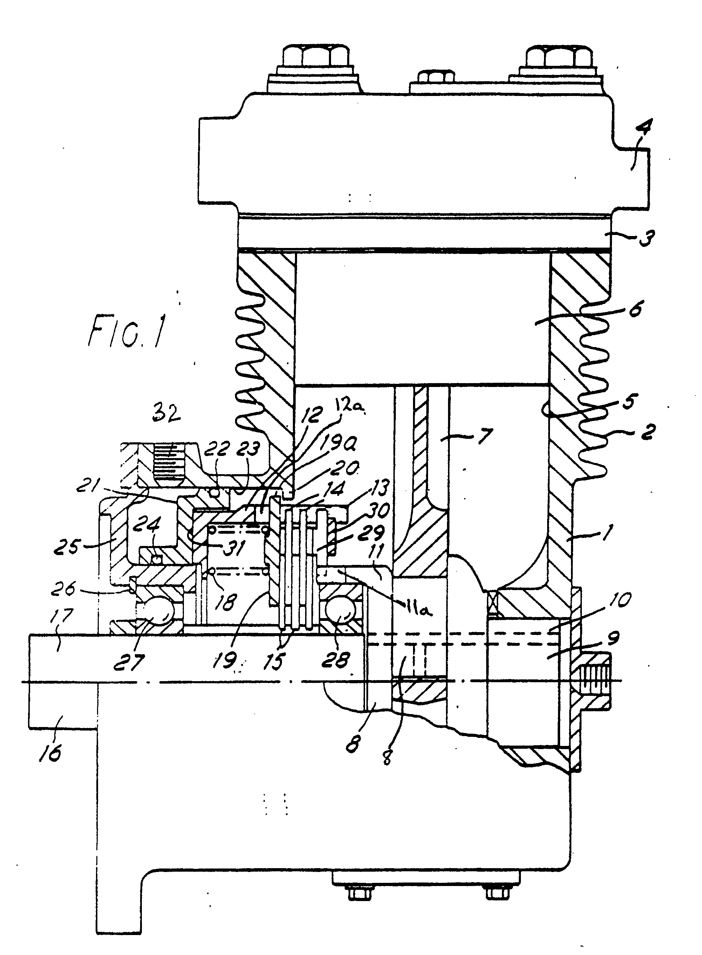

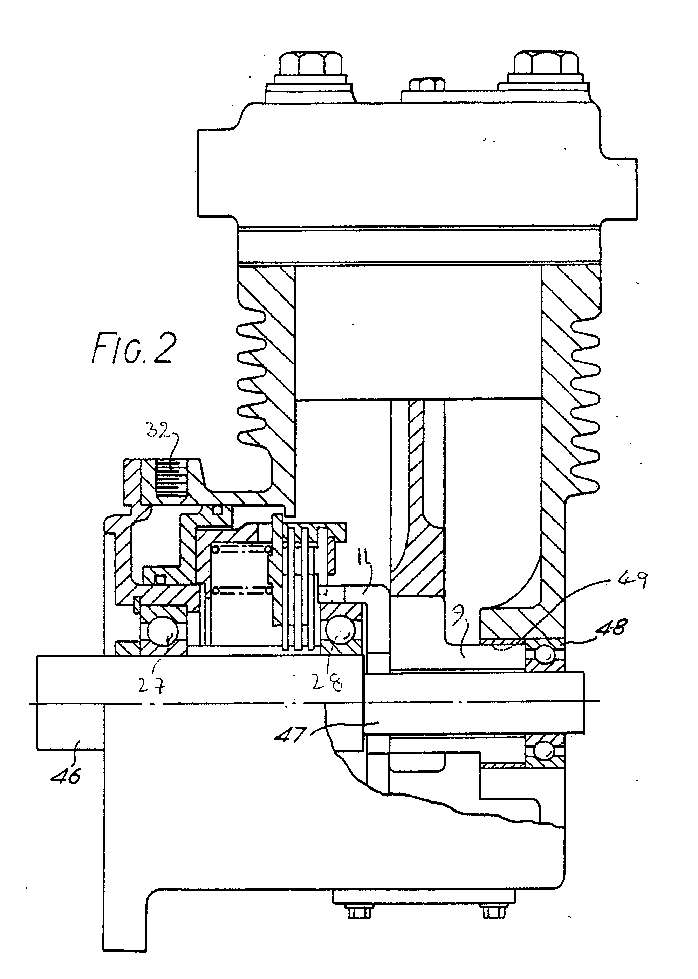

In order that the invention may be more clearly understood and readily carried into effect, the same will be further described by way of example with reference to Figs. 1 and 2 of the accompanying drawings.

Referring to Fig. 1 a single cylinder reciprocating piston compressor assembly is shown therein in a partially cut-away and sectioned view. The compressor housing comprises a crankcase and cylinder 1 with cooling fins 2, the compressor cylinder being provided with a valve plate 3 and a cylinder head 4. A piston 6 is reciprocable within a bore 5 of the cylinder 1 via a connecting rod 7 actuated by a crankpin 8 of a crankshaft 9. The free end of the crankshaft 9 is carried in a bearing 10 (second bearing) of the crankcase and the driven end 11 of the crankshaft is formed of a cup-shaped driven part with castellations 11a engageable with complimentary slots of an end plate 29 of a shell 12 of a multi-plate friction clutch assembly. The crankshaft and the clutch shell 12 are thus incorporated together such that the clutch at least occupies part of a space generated by a projection of the path of the piston 6.

The shell 12 of the friction clutch assembly further includes a generally cylindrical part with axial slots such as 13 which locate with outer fingers of a plurality of clutch plates 14 interleaved with a further plurality of clutch plates 15. Inner fingers of plates 15 locate in turn with splines of a drive shaft 16, the outer end 17 of which is normally to be provided with a gear wheel (not shown) or other means, for engaging with a drive gear train of an internal combustion engine. The clutch plates 14 are urged together by a resilient urging means in the form of a plurality of circumferential spaced compression springs 18 acting between the oter end of the shell 12 and an annular compression member 19 of limited axial movement provided with radial slots matching the peripheral slots of the plates 15 also to accept the shell 12. The annular compression member 19 is a member of limited axial movement because it has a peripheral extension means 19a which stands outwardly of the shell via respective parts 12a of slots 13 such as to be engeable with an annular axial stop 20 formed in the housing. Such engagement can take place when the shell 12 is urged rightwardly by the action of pressure at a control pressure port 32, acting on an annular fluid pressure operable release piston 21. An outer seal 22 of the release piston slides in a bore 23 of the housing and an inner seal 24 slides on an inwardly located spigot on an end plate 25. The end plate 25 is secured by bolts (not shown) and carries a retaining circlip 26 for retaining a main ball bearing 27 (first bearing) for the drive shaft the inner end of which is supported in a third ball bearing 28 fitted into and rotatably supporting the end 11 of the crankshaft 9. Drive from the shell 12 to the end 11 of the crankshaft is effected by the engaging fingers of the end plate 29 which is retained by a circlip 30 in the cage.

The annular piston 21 is provided with means (not shown) for preventing rotation thereof in the housing due to frictional forces at its interface 31 with the end face of the shell 12.

In operation of the compressor assembly, assuming that no fluid pressure signal is applied at control pressure port 32 to the piston 21, the driven input shaft 16 drives the plates 15 and by virtue of the frictional engagement of these with the interleaved plates 14, the shell 12 is rotated to drive the compressor via cup-shaped part 11. When the compressor is required to cease operation due to a desired stored pressure having been attained this is signalled by a governor valve a fluid pressure signal to port 32 to urge piston 21 and shell 12 in a rightward direction. This results in engagement between the extension means 19a of the compression member 19 with the annular stop 20 to relieve the plates of the compression forces of spring 18 and the inner plates 15 are allowed to run free of the outer plates 14. The shell 12 therefore comes to rest and the compressor stops rotating. Release of the signal pressure at the control port allows the drive to be resumed when required.

In an alternative embodiment of the invention as shown in Fig. 2 the continuously running rotatable input shaft is now denoted by reference 46 and the inner end thereof is provided with a reduced diameter extension 47 which passes rotatably coaxially through the crank-shaft. This extension runs in a ball bearing 48 at the other end of the crankcase wherein the crankshaft is rotatably supported by bearing bush 49. This arrangement operates in an identical manner to that of Fig. 1 with the advantage of full support of the input shaft in bearings on both sides of the housing. Furthermore, if required, the extension 47 can be even further extended to provide auxiliary equipment drive.

## Claims

1. A compressor assembly comprising a housing (1) including a rotatable drive input shaft (16; 46,47) the outer end of which is rotatably supported by a first bearing means (27) in the housing (1) and being releasably coupled via a releasable friction clutch to a drive end of a compressor shaft (9, 11) the free end of which is rotatably supported by second bearing means (10; 49) in the housing (1), said compressor shaft (9, 11) having an eccentric part (8) coupled to a reciprocable compression member (6) characterised in that said drive input shaft (16; 46,47) carries third bearing means (28) rotatably fitted to and supporting said drive end of the compressor shaft (8,9,11) and that said clutch is at least partially contained in a space in the housing defineable by a protection of the path of movement of the compression member (6).

2. A compressor assembly as claimed in Claim 1 characterised in that said clutch comprises a plurality of clutch plates (14) rotationally engaging said drive shaft and interleaved with a plurality of further clutch plates (15) rotationally engaging a shell (12) containing resilient means (18) acting between the shell (12) and a member (19) of limited axial movement for urging the plates together an annular stop (20) axially located relatively to the housing and clutch release means (21) being disposed axially outwardly of the clutch and axially operable in a direction to displace the shell (12) to oppose said resilient means by virtue of engagement of said member (19) with said stop (20) and thereby to release the clutch.

3. A compressor assembly as claimed in claim 1 or 2 characterised in that said reciprocable compression member is a piston (6).

4. A compressor assembly as claimed in claim 2 or claims 2 and 3 characterised in that said stop (20) comprises an annular shoulder provided in the housing surrounding the shell (12) and said member (19) of limited axial movement having extension means 19a which extends radially outwardly of the shell for engagement with said stop (20).

5. A compressor as claimed in claim 4 characterised in that said clutch release means (21) comprises an annular piston sealingly movable in a pressure chamber in the housing and bearing against an annular surface (31) of the shell when a pressure signal is applied to a control pressure port (32).

6. A compressor as claimed in claims, 1, 2, 3, 4 or 5 characterised in that said rotatable input shaft (16) and said compressor shaft extends coaxially one running within the other.

7. A compressor as claimed in claim 6 characterised in that said rotatable input shaft has an extension (47) which passes axially through said compressor shaft (9).

## Revendications

1. Ensemble de compresseur comprenant un carter (1) comportant un arbre d'entrée d'entraînement rotatif (16,46,47) dont l'extrémité externe est soutenue à rotation par un premier roulement (27) dans le carter (1) et est couplée de façon libérable, par l'intermédiaire d'un embrayage à friction débrayable, à une extrémité d'entraînement d'un arbre de compresseur (9,11) dont l'extrémité libre est soutenue de façon rotative par un second roulement (10,49) dans le carter (1), l'arbre de compresseur (9,11) ayant une partie excentrée (8) qui est couplée à un organe de compression (6) à mouvement de va-et-vient, caractérisé en ce que ledit arbre d'entrée d'entraînement (16,46,47) porte un troisième roulement (28) ajusté de façon rotative sur ladite extrémité d'entraînement de l'arbre (8,9,11) du compresseur et soutenant cette extrémité, et en ce que ledit embrayage est au moins partiellement contenu dans un espace du carter délimité par une projection sur le trajet de déplacement de l'organe de compression (6).

2. Ensemble de compresseur suivant la revendication 1, caractérisé en ce que ledit embrayage est constitué par plusieurs plateaux d'embrayage (14) en contact en rotation avec ledit arbre d'entraînement et imbriqués avec plusieurs autres plateaux d'embrayage (15) en contact en rotation avec une coquille (12) contenant un organe élastique (18) agissant entre la coquille (12) et un organe (19) apte à un déplacement axial limité pour forcer les plaques ensemble, une butée annulaire (20) disposée axialement par rapport au carter, et des moyens (21) de débrayage étant disposés axialement à l'extérieur de l'embrayage et aptes à être actionnés axialement dans une direction pour déplacer la coquille (12) pour s'opposer auxdits moyens élastiques en raison de la venue en contact dudit organe (19) avec ladite butée (20) et débrayer ainsi l'embrayage.

3. Ensemble de compresseur suivant la revendication 1 ou 2, caractérisé en ce que ledit organe de compression à mouvement de va-et-vient est un piston (6).

4. Ensemble de compresseur suivant la revendication 2, ou les revendications 2 et 3, caractérisé en ce que ladite butée (20) est constituée par un épaulement annulaire prévu dans le carter entourant la coquille (12), ledit organe (19) apte à un déplacement axial limité ayant un appendice (19a) qui s'étend radialement à l'extérieur de la coquille pour coopérer avec ladite butée (20).

5. Ensemble de compresseur suivant la revendication 4, caractérisé en ce que les moyens (21) de débrayage comprennent un piston annulaire déplaçable de façon étanche dans une chambre de pression dans le carter et prenant appui contre une surface annulaire (31) de la coquille lorsqu'un signal de pression est appliqué à un orifice (32) de commande de pression.

6. Ensemble de compresseur suivant les revendications 1,2,3,4 ou 5, caractérisé en ce que ledit arbre d'entrée rotatif (16) et ledit arbre de compresseur s'étendent co-axialement l'un fonctionnant à l'intérieur de l'autre.

7. Ensemble de compresseur suivant la revendication 6, caractérisé en ce que ledit arbre d'entrée rotatif comporte un prolongement (47) qui s'étend axialement à travers ledit arbre (9) du compresseur.

**Patentansprüche**

1. Verdichteraggregat, umfassend ein Gehäuse (1) mit einer drehbaren Antriebseingangswelle (16;46,47), deren äußeres Ende durch eine erste Lagereinrichtung (27) in dem Gehäuse (1) drehbar abgestützt und über eine freigebbare Reibungskupplung mit dem Antriebsende einer Verdichterwelle (9,11) freigebbar gekoppelt ist, deren freies Ende durch eine zweite Lagereinrichtung (10;49) in dem Gehäuse (1) drehbar abgestützt ist, wobei die Verdichterwelle (9,11) einen exzentrischen Teil (8) hat, der mit einem hin- und herbewegbaren Kompressionsteil (6) verbunden ist,
dadurch gekennzeichnet, daß
die Antriebseingangswelle (16;46,47) eine dritte Lagereinrichtung (28) trägt, die mit dem Antriebsende der Verdichterwelle (8,9,11) drehbar verbunden ist und dieses abstützt, und daß die Kupplung wenigstens teilweise in einem Raum in dem Gehäuse enthalten ist, der durch eine Projektion des Bewegungsweges des Kompressionsteiles (6) bestimmbar ist.

2. Verdichteraggregat nach Anspruch 1, dadurch gekennzeichnet, daß die Kupplung eine Mehrzahl von Kupplungsplatten (14) aufweist, die mit der Antriebswelle in Dreheingriff treten und mit einer Mehrzahl von weiteren Kupplungsplatten (15) ineinandergreifend angeordnet sind, welche mit einem Mantel (12) in Dreheingriff treten, welcher eine federnde Einrichtung (18) enthält, die zwischen dem Mantel (12) und einem Teil (19), der begrenzte Axialbewegung ausführen kann, wirkt, um die Platten zusammen einen ringförmigen Anschlag (20) zu drücken, der relativ zu dem Gehäuse axial angeordnet ist, und Kupplungsfreigabemittel (21) axial auswärts der Kupplung angeordnet und axial betätigbar sind in einer Richtung, in der der Mantel (12) entgegen der Kraft der Federeinrichtung verschoben wird als Folge des Eingriffs des genannten Teiles (19) mit dem Anschlag (20), um dadurch die Kupplung freizugeben.

3. Verdichteraggregat nach Anspruch 1 oder 2, dadurch gekennzeichnet, daß der hin- und herbewegbare Kompressionsteil ein Kolben (6) ist.

4. Verdichteraggregat nach Anspruch 2 oder nach den Ansprüchen 2 und 3, dadurch gekennzeichnet, daß der Anschlag (20) eine ringförmige Schulter aufweist, die in dem Gehäuse den Mantel (12) umgebend vorgesehen ist, und der Teil (19), der begrenzte axiale Bewegung ausführen kann, Verlängerungsmittel (19a) hat, die sich radial auswärts des Mantels erstrecken für Eingriff mit dem Anschlag (20).

5. Verdichter aggregat nach Anspruch 4, dadurch gekennzeichnet, daß die Kupplungsfreigabemittel (21) einen ringförmigen Kolben aufweisen, der in einer Druckkammer in dem Gehäuse abgedichtet bewegbar ist und sich gegen eine ringförmige Fläche (31) des Mantels legt, wenn eine Drucksignal an eine Steuerdrucköffnung (32) angelegt wird.

6. Verdichter aggregat nach den Ansprüchen 1, 2, 3, 4 oder 5, dadurch gekennzeichnet, daß die drehbare Eingangswelle (16) und die Kompressorwelle sich gleichachsig erstrecken und eine in der anderen läuft.

7. Verdichter aggregat nach Anspruch 6, dadurch gekennzeichnet, daß die drehbare Eingangswelle eine Verlängerung (47) hat, die axial durch die Verdichterwelle (9) hindurchgeht.

FIG.1

FIG.2